(19) Europäisches Patentamt
European Patent Office
Office européen des brevets

(11) **EP 1 657 227 B1**

(12) **EUROPÄISCHE PATENTSCHRIFT**

(45) Veröffentlichungstag und Bekanntmachung des Hinweises auf die Patenterteilung:
**02.01.2008 Patentblatt 2008/01**

(51) Int Cl.:
*C04B 35/565* (2006.01)    *C04B 35/573* (2006.01)
*C04B 35/52* (2006.01)

(21) Anmeldenummer: **05024900.2**

(22) Anmeldetag: **15.11.2005**

(54) **Verfahren zur Herstellung eines Karbidkeramikmaterials mit definiertem gradierten Phasenverteilungsprofil, Karbidkeramikmaterial und Bauteil**

Process of manufacture of a carbide ceramic material with a defined graded phase distribution profile, carbide ceramic material and structural member.

Procédé de fabrication d'un materiau céramique en carbure, présentant un gradient défini de distribution de phase, materiau en carbure céramique et élément de construction.

(84) Benannte Vertragsstaaten:
**DE FR GB IT**

(30) Priorität: **15.11.2004  DE 102004056072**

(43) Veröffentlichungstag der Anmeldung:
**17.05.2006  Patentblatt 2006/20**

(73) Patentinhaber: **Deutsches Zentrum für Luft- und Raumfahrt e.V.**
**51147 Köln (DE)**

(72) Erfinder:
• **Schmidt, Jens, Dr.**
  **70736 Fellbach (DE)**
• **Gahr, Michaela**
  **71065 Sindelfingen (DE)**
• **Fromm, Jörg, Prof.**
  **82211 Herrsching (DE)**
• **Wegener, Gerd, Prof.**
  **82166 Gräfelfing (DE)**
• **Tröger, Fritz**
  **85778 Haimhausen (DE)**
• **Hofenauer, Andreas**
  **82223 Eichenau (DE)**
• **Treusch, Olaf**
  **82266 Inning (DE)**

(74) Vertreter: **Hoeger, Stellrecht & Partner**
**Patentanwälte**
**Uhlandstrasse 14 c**
**70182 Stuttgart (DE)**

(56) Entgegenhaltungen:
EP-A- 0 528 131    EP-A- 0 891 956
DE-A1- 4 407 421    DE-A1- 19 947 731
US-A1- 2001 026 868

EP 1 657 227 B1

**Beschreibung**

Die Erfindung betrifft ein Verfahren zur Herstellung eines Karbidkeramikmaterials, insbesondere Siliciumkarbidkeramikmaterial, mit definiertem gradierten Phasenverteilungsprofil.

Die Erfindung betrifft ferner ein Karbidkeramikmaterial, insbesondere Siliciumkarbidkeramikmaterial, mit einer Si/SiC-reichen Keramikmatrix.

Die Erfindung betrifft ferner ein Verfahren zur Herstellung eines Kohlenstoffkörpers mit definiertem gradierten Dichteprofil.

Aus der DE 199 47 731 A1 ist ein Verfahren zur Herstellung eines Bauteils aus SiC-Keramik bekannt, bei dem ein Ausgangskörper aus zellulosehaltigem Material pyrolysiert und nachfolgend in den pyrolysierten Ausgangskörper Silicium infiltriert wird, das wenigstens teilweise mit Kohlenstoff zu SiC reagiert, wobei als Ausgangskörper ein technisches Halbzeug eingesetzt wird, das aus Bestandteilen in Form von Spänen und/oder einer oder mehreren Lagen aus zellulosehaltigem Material, gebunden mit pyrolysierbarem Bindemittel, hergestellt wird und wobei das Gefüge des Bauteils durch die Wahl und die Massenanteile des zellulosehaltigen Materials zu dem Bindemittel eingestellt wird.

In der nicht vorveröffentlichten deutschen Anmeldung Nr. 103 29 822.3 vom 30. Juni 2003 des gleichen Anmelders ist ein Verfahren zur Herstellung von Strukturkeramiken und/oder Funktionskeramiken aus Siliciumkarbidkeramik bekannt, bei welchem aus einem zellulosehaltigen Werkstoff ein poröser Vorkörper hergestellt wird, der poröse Vorkörper mittels Pyrolyse in einen offenporösen Kohlenstoffkörper umgewandelt wird und der offenporöse Kohlenstoffkörper durch Infiltration von Silicium umfassenden Materialien in eine Silicium umfassende Karbidkeramik, insbesondere Siliciumkarbidkeramik, umgewandelt wird, wobei zur Herstellung des Vorkörpers als Ausgangsbestandteil mindestens zellulosehaltiges Pulver verwendet wird.

Ferner ist in dieser Anmeldung ein Bauteil aus Strukturkeramik und/oder Funktionskeramik, umfassend einen mit Silicium umfassenden Materialien infiltrierten und dadurch im wesentlichen Silicium umfassenden Karbid, insbesondere Siliciumkarbid, keramisierten Kohlenstoffkörper offenbart, wobei der Kohlenstoffkörper durch Verwendung von mindestens zellulosehaltigem Pulver und Bindemittel als Ausgangsbestandteile eine im wesentlichen homogene Porenstruktur aufweist.

Weiterhin ist in der genannten Anmeldung ein Vorkörper zur Herstellung von Strukturkeramik und/oder Funktionskeramik aus Silicium umfassender Karbidkeramik, insbesondere Siliciumkarbidkeramik, durch Infiltration von Silicium umfassenden Materialien in einem aus einem derartigen Vorkörper durch Pyrolyse hergestellten Kohlenstoffkörper offenbart, wobei der Vorkörper mindestens gebundenes zellulosehaltiges Pulver als Ausgangsbestandteil aufweist.

Aus der nicht vorveröffentlichten deutschen Anmeldung Nr. 10 2004 043 985.0 vom 8. September 2004 des gleichen Anmelders ist ein Verfahren zur Herstellung eines Karbidkeramikmaterials, insbesondere Siliciumkarbidmaterial, bekannt, bei welchem aus einem Ausgangsmaterial, welches zellulosehaltiges Pulver umfasst, ein poröser Vorkörper hergestellt wird, der Vorkörper durch Pyrolyse in einen offenporösen Kohlenstoffkörper umgewandelt wird und der Kohlenstoffkörper durch Infiltration von Silicium umfassenden Materialien in eine Silicium umfassende Karbidkeramik umgewandelt wird, wobei zur Herstellung des Ausgangsmaterials Kohlenstoff-Kurzfasern verwendet werden.

Aus der EP 0 891 956 A2 und der US 2001/0026868 A1 ist ein Si-SiC-Material bekannt, welches einen Konzentrationsgradienten in Si aufweist. Dieses Material wird dadurch hergestellt, dass Si in ein geschmolzenes Material schmelzinfiltriert wird, wobei das geschmolzene Material SiC-Partikel umfasst.

In dieser Anmeldung ist ferner ein Karbidkeramikmaterial, insbesondere Siliciumkarbidkeramikmaterial, beschrieben, bei welchem in einer Si/SiC-reichen Keramikmatrix Kohlenstoff-Kurzfasern verteilt eingebettet sind.

Der Erfindung liegt die Aufgabe zugrunde, ein Verfahren der eingangs genannten Art bereitzustellen, mittels welchem sich ein Karbidkeramikmaterial mit definiertem gradierten Phasenverteilungsprofil herstellen läßt.

Diese Aufgabe wird bei dem genannten Verfahren erfindungsgemäß dadurch gelöst, dass aus einem Ausgangsmaterial, welches zellulosehaltiges Pulver umfasst, ein poröser Vorkörper hergestellt wird, der Vorkörper durch Pyrolyse in einen offenporösen Kohlenstoffkörper umgewandelt wird und der Kohlenstoffkörper durch Infiltration von Silicium umfassenden Materialien in eine Silicium umfassende Karbidkeramik umgewandelt wird, wobei der Vorkörper mit einem definierten gradierten Dichteprofil hergestellt wird.

Der Vorkörper wird mittels zellulosehaltigem Pulver hergestellt. Die Korngröße der Pulverpartikel liegt insbesondere unterhalb 300 $\mu$m, vorzugsweise unterhalb 50 $\mu$m und besonders bevorzugt unterhalb 30 $\mu$m. Es hat sich gezeigt, dass sich dann gradierte Kohlenstoffkörper und Karbidkeramikmaterial-Bauteile mit definiert eingestellten Gradienten "maßgeschneidert" herstellen lassen. Insbesondere lassen sich kontinuierliche bzw. stufenlose Gradienten einstellen.

Durch das erfindungsgemäße Verfahren lassen sich Bauteile (Kohlenstoffkörper und Karbidkeramikmaterial-Bauteile) mit definierter Dichtegradientenstruktur bzw. Phasenverteilungsgradientenstruktur herstellen. Es können beispielsweise symmetrische oder asymmetrische Gradientenbereiche eingestellt werden. Weiterhin ergibt sich die Möglichkeit, den Verlauf des Gradienten einzustellen und auch die Amplitude (absolute Werte der Rohdichte bzw. des Phasenanteils) in einem Gradientenbereich einzustellen.

Günstig ist es, wenn das Phasenverteilungsprofil mindestens einen Gradientenbereich aufweist. Beispielsweise liegt eine Gradierung bezüglich der Verteilung einer SiC-Phase und einer Si-Phase vor. Dadurch läßt sich beispielsweise an einem entsprechenden Bauteil eine Funktionstrennung durchführen. Es lassen sich dadurch beispielsweise Bereiche mit unterschiedlicher Abriebfestigkeit, Härte und Wärmeleitfähigkeit und Zugfestigkeit, Druckfestigkeit oder Biegefestigkeit an einem Bauteil ausbilden.

Günstig ist es dabei, wenn das Dichteprofil des Vorkörpers mindestens einen Gradientenbereich aufweist. Dadurch läßt sich ein Phasenverteilungsprofil mit einem Gradientenbereich herstellen.

Ganz besonders vorteilhaft ist es, wenn bei der Einstellung der Dichte und/oder des Dichteprofils des Vorkörpers die Veränderung der Rohdichte bei der Pyrolyse zur Herstellung des Kohlenstoffkörpers berücksichtigt wird. Bei der Pyrolyse zur Karbonisierung des Vorkörpers erfolgt üblicherweise eine Volumenreduzierung und eine Veränderung der Rohdichte. Wenn dies berücksichtigt wird, dann läßt sich der Kohlenstoffkörper mit einem definierten Dichteprofil auch bezüglich des absoluten Werts der Rohdichte definiert einstellen. Dadurch wiederum läßt sich ein definiertes gradiertes Phasenverteilungsprofil für das Karbidkeramikmaterial einstellen.

Es ist vorgesehen, dass das Ausgangsmaterial für den Vorkörper Bindemittel umfasst. Der Vorkörper wird über Bindemittelaushärtung hergestellt.

Es kann vorgesehen sein, dass ein Ausgangsmaterial für den Vorkörper ein oder mehrere Additive und/oder Katalysatoren umfasst. Über die Additive lassen sich bestimmte Eigenschaften des Vorkörpers und/ oder des Kohlenstoffkörpers und/oder des hergestellten Karbidkeramikmaterials einstellen.

Beispielsweise sind ein oder mehrere reaktive Additive vorgesehen. Die reaktiven Additive nehmen an den chemischen Reaktionen beispielsweise bei der Silicierung teil. Bei solchen reaktiven Additiven kann es sich um Ruß, Graphit oder auch um dehydrierende Verbindungen wie beispielsweise Borsäure oder Phosphorsäure handeln.

Es ist auch alternativ oder zusätzlich möglich, dass ein oder mehrere nicht-reaktive Additive verwendet werden. Beispiele für solche nicht-reaktiven Additive sind Karbide oder Boride. Es können auch Fasern und insbesondere Kohlenstoffasern eingesetzt werden. In der nicht vorveröffentlichten deutschen Patentanmeldung Nr. 10 2004 043 985.0 vom 8. September 2004 ist die Verwendung von Kohlenstoff-Kurzfasern insbesondere mit einer Länge kleiner als 3 mm als Additiv beschrieben.

Es ist insbesondere vorgesehen, dass der Vorkörper aus einem Ausgangsmaterial durch Pressen hergestellt wird. Das Ausgangsmaterial bildet eine Preßmasse. Dadurch läßt sich ein Vorkörper einer definierten Form herstellen.

Insbesondere wird beim Pressvorgang Wärme zugeführt, um für eine Bindemittelaushärtung zu sorgen.

Es ist grundsätzlich möglich, dass das Dichteprofil über die Zusammensetzung des Ausgangsmaterials eingestellt wird.

Beispielsweise werden unterschiedliche Partikelgrößen im Ausgangsmaterial verwendet und Partikel unterschiedlicher Partikelgröße im Ausgangsmaterial räumlich variierend angeordnet.

Es ist zusätzlich oder alternativ möglich, dass der Anteil an Additiv oder Additiven im Ausgangsmaterial räumlich variierend gewählt wird. Beispielsweise wird der Faseranteil variiert. Es ist beispielsweise auch möglich, oberflächennahe Bereiche mit Borid bzw. einer Borverbindung als Additiv zu dotieren. Dadurch läßt sich das Schrumpfverhalten bei der Pyrolyse gezielt beeinflussen, und zwar mit räumlicher Variation und insbesondere räumlicher Gradierung. Bor hat auch einen günstigen Einfluß auf die SiC-Bildung.

Ganz besonders vorteilhaft ist es, wenn das Dichteprofil des Vorkörpers während des Herstellungsvorgangs der Vorkörpers aus einem Ausgangsmaterial eingestellt wird. Es ist dabei grundsätzlich möglich, dass das Ausgangsmaterial räumlich variierend zusammengesetzt ist. Wenn die Einstellung des Dichteprofils über den Herstellungsvorgang des Vorkörpers erfolgt, dann kann jedoch auch das Ausgangsmaterial homogen sein. Dadurch ist die Herstellung stark vereinfacht. Beispielsweise wurden Ausgangsbestandteile für das Ausgangsmaterial gemischt und homogenisiert und dann durch die Verfahrensdurchführung insbesondere beim Pressen ein gradiertes Dichteprofil erzeugt.

Günstig ist es, wenn die Ausgangsmaterial-Anteile (insbesondere Massenanteile) zur Herstellung des Vorkörpers so gewählt werden, dass sich eine möglichst einheitliche Schrumpfung und/oder Entgasung ergibt. Es ist üblicherweise so, dass eine hohe Rohdichte eine hohe Schrumpfung ergibt. So ist zu erwarten, dass in einer höher verdichteten Randzone sich eine hohe Schrumpfung während der Pyrolyse ergibt. Es ist dann zu empfehlen, dass der Anteil an Additiven, welche die Schrumpfung auffangen bzw. dieser gegensteuern, in der höher verdichteten Randzone geringer gewählt wird als in einer niedriger verdichteten Innenzone. Mögliche Additive, die die Schrumpfung auffangen bzw. dieser gegensteuern sind C-/SiC-/Si-Pulver oder auch Additive, die zu einer erhöhten C-Ausbeute während der Pyrolyse führen wie beispielsweise Bor-Verbindungen. Es ist beispielsweise auch möglich, dass das Ausgangsmaterial so gewählt wird bzw. so eingestellt wird, dass in bestimmten Bereichen die Schrumpfung erhöht ist. Beispielsweise kann im Inneren eines Körpers der Anteil an zellulosehaltigem Ausgangsmaterial bzw. der Harzanteil höher gewählt werden.

Insbesondere wird während des Herstellungsvorgangs des Vorkörpers der Verdichtungswiderstand des zellulosehaltigen Pulvers räumlich beeinflusst. Durch die Beeinflussung des Verdichtungswiderstands läßt sich wiederum ein gradiertes Dichteprofil für den Vorkörper herstellen.

Der Verdichtungswiderstand läßt sich räumlich über eine Wärmebeeinflussung einstellen. Insbesondere werden unterschiedliche Bereiche einer Preßmasse unterschiedlich wärmebeeinflusst. Die unterschiedliche räumliche Wärmebeeinflussung kann auch über eine zeitlich variierende Wärmebeeinflussung erfolgen.

Es ist alternativ oder zusätzlich möglich, dass der Verdichtungswiderstand räumlich über das Pressen des Vorkörpers mit Schließphasen und/oder Öffnungsphasen und/oder Haltephasen an einer Preßform eingestellt wird.

Es ist auch möglich, den Verdichtungswiderstand räumlich über den Feuchtigkeitsgehalt des Ausgangsmaterials einzustellen. Höhere Feuchtigkeitsgehalte führen zu einer schnelleren Erwärmung des entsprechenden Preßmassenbereichs und damit zu einem geringeren Verdichtungswiderstand.

Günstig ist es, wenn die Rohdichte im Querschnitt des Kohlenstoffkörpers höchstens 0,96 g/cm$^3$ beträgt. Es hat sich gezeigt, dass sich dann eine Komplettkonvertierung des Kohlenstoffkörpers in ein Karbidkeramikmaterial-Bauteil erreichen läßt.

Es kann vorgesehen sein, dass der Vorkörper und/oder Kohlenstoffkörper endkonturnah hergestellt wird. Über den Kohlenstoffkörper läßt sich dann das Karbidkeramikmaterial-Bauteil auf einfache Weise herstellen, da die Nachbearbeitung minimiert ist. Es ist auch möglich, mehrere endkonturnah hergestellte Kohlenstoffkörper zusammenzuführen und dann eine gemeinsame Silicierung durchzuführen. Die Fügeverbindung kann beispielsweise mittels einer kohlenstoffhaltigen Paste hergestellt werden.

Alternativ kann es vorgesehen sein, dass der Kohlenstoffkörper vor der Infiltration durch Silicium mechanisch bearbeitet wird, um möglichst nahe an der endgültigen Form des herzustellenden Bauteils zu sein.

Günstig ist es, wenn der SiC-Gehalt in der Karbidkeramik räumlich variierend eingestellt wird. Dadurch lassen sich Bauteile mit bezogen auf unterschiedliche Bauteilbereiche variierenden Eigenschaften einstellen. Beispielsweise lassen sich Bauteile mit einem hohen SiC-Gehalt an der Oberfläche einstellen. Durch einen hohen SiC-Gehalt wird eine hohe Abriebfestigkeit, große Härte und hohe Wärmeleitfähigkeit gewährleistet. Dies ist beispielsweise vorteilhaft für Friktionsanwendungen (Reibkörper).

Es hat sich als günstig erwiesen, wenn der SiC-Gehalt zwischen 25 Volumen-% und 95 Volumen-% und insbesondere zwischen 30 Volumen-% und 90 Volumen-% eingestellt wird. Durch das erfindungsgemäße Verfahren läßt sich der SiC-Gehalt mindestens in dieser Spanne definiert einstellen.

Der Erfindung liegt ferner die Aufgabe zugrunde, ein Karbidkeramikmaterial der eingangs genannten Art bereitzustellen, welches an Anwendungen anpassbar ist.

Diese Aufgabe wird bei dem genannten Karbidkeramikmaterial erfindungsgemäß dadurch gelöst, dass das Phasenverteilungsprofil der Keramikmatrix mindestens einen Gradientenbereich aufweist, wobei der SiC-Gehalt räumlich variiert.

Über den Gradientenbereich läßt sich in einem Bauteil, welches aus dem erfindungsgemäßen Karbidkeramikmaterial hergestellt ist, eine Funktionstrennung durchführen. Es lassen sich Bereiche ausbilden, welche einen höheren SiC-Gehalt haben als andere Bereiche, wobei zwischen den Bereichen ein gradierter Übergang und insbesondere stufenloser Übergang erfolgt.

Dadurch ist es beispielsweise möglich, an einer Oberfläche eines entsprechenden Bauteils (Keramiksubstrats) einen Wärmeausdehnungskoeffizienten definiert einzustellen, um eine Anpassung an eine auf das Keramiksubstrat aufzubringende Beschichtung zu erreichen.

Der SiC-Gehalt liegt dabei vorzugsweise zwischen 25 Volumen-% und 95 Volumen-%.

Es ist entsprechend günstig, wenn der Si-Gehalt räumlich variiert.

Vorteilhafterweise variiert der Si-Gehalt räumlich reziprok zum SiC-Gehalt, d. h. die Anteilsvariation ist gegenläufig: Wenn der Si-Gehalt in einem bestimmten Bereich in eine Richtung zunimmt, nimmt der SiC-Gehalt in der gleichen Richtung ab und umgekehrt (sofern der Kohlenstoffgehalt nicht räumlich variiert).

Es kann dabei auch vorgesehen sein, dass in der Si/SiC-reichen Keramikmatrix Fasern angeordnet sind. Es kann sich dabei insbesondere um Kohlenstofffasern und insbesondere Kohlenstoffkurzfasern handeln. In diesem Zusammenhang wird ausdrücklich auf die nicht vorveröffentlichte deutsche Patentanmeldung Nr. 10 2004 043 985.0 vom 8. September 2004 Bezug genommen.

Mittels des erfindungsgemäßen Verfahrens läßt sich ein Bauteil herstellen bzw. ein hergestelltes Bauteil umfasst das erfindungsgemäße Karbidkeramikmaterial.

Insbesondere für Friktionsanwendungen kann es vorteilhaft sein, wenn das Bauteil zu einer Oberfläche hin einen höheren SiC-Anteil aufweist als zum Bauteilinneren hin. An einer Bauteiloberfläche läßt sich dadurch eine hohe Abriebfestigkeit, eine große Härte und eine hohe Wärmeleitfähigkeit einstellen.

Wenn in einem Bauteilinneren Kohlenstofffasern angeordnet sind, dann läßt sich dort beispielsweise eine hohe Zugfestigkeit oder Druckfestigkeit oder Biegefestigkeit erreichen.

Es kann auch vorgesehen sein, dass über das Phasenverteilungsprofil ein Wärmeausdehnungsprofil eingestellt ist. Dadurch läßt sich beispielsweise an einer Oberfläche des entsprechenden Bauteils ein definierter Wärmeausdehnungskoeffizient einstellen, um eine Anpassung an eine aufzubringende Beschichtung zu erreichen.

Der Erfindung liegt ferner die Aufgabe zugrunde, ein Verfahren zur Herstellung eines Kohlenstoffkörpers mit definiertem gradierten Dichteprofil bereitzustellen.

Diese Aufgabe wird erfindungsgemäß dadurch gelöst, dass aus einem Ausgangsmaterial, welches zellulosehaltiges Pulver umfasst, ein poröser Vorkörper hergestellt wird und der Vorkörper durch Pyrolyse in einen offenporösen Kohlenstoffkörper umgewandelt wird, wobei der Vorkörper mit einem definierten gradierten Dichteprofil hergestellt wird.

Das erfindungsgemäße Verfahren weist die bereits im Zusammenhang mit dem erfindungsgemäßen Verfahren zur Herstellung eines Karbidkeramikmaterials erläuterten Vorteile auf.

Weitere vorteilhafte Ausgestaltungen des Verfahrens zur Herstellung eines Kohlenstoffkörpers wurden ebenfalls bereits im Zusammenhang mit dem erfindungsgemäßen Verfahren zur Herstellung eines Karbidkeramikmaterials erläutert.

Ein entsprechend hergestellter Kohlenstoffkörper läßt sich beispielsweise als Filter oder Filterteil verwenden. Die Filtereigenschaften lassen sich über das erfindungsgemäße Herstellungsverfahren definiert einstellen.

Es lassen sich auch Bauelemente mit räumlich definiert variierenden elektrischen und/oder thermischen Leitfähigkeiten herstellen.

Die nachfolgende Beschreibung bevorzugter Ausführungsformen dient im Zusammenhang mit der Zeichnung der näheren Erläuterung der Erfindung. Es zeigen:

Figur 1    den räumlichen Verlauf der Rohdichte $\rho_r$ eines gemäß einer Ausführungsform des erfindungsgemäßen Verfahrens hergestellten plattenförmigen Vorkörpers und einen berechneten Verlauf der Rohdichte eines aus dem Vorkörper hergestellten plattenförmigen Kohlenstoffkörpers als Funktion der relativen Dicke $d_r$ für ein erstes Ausführungsbeispiel;

Figur 2    eine auflichtmikroskopische Aufnahme des Kohlenstoffkörpers des ersten Ausführungsbeispiels bei kleiner relativer Dicke $d_r$;

Figur 3    eine auflichtmikroskopische Aufnahme des Kohlenstoffkörpers des ersten Ausführungsbeispiels bei großer relativer Dicke $d_r$;

Figur 4    den Volumenanteil von SiC und von Si als Funktion der relativen Dicke $d_r$ einer aus dem Kohlenstoffkörper gemäß dem ersten Ausführungsbeispiel hergestellten Siliciumkarbidkeramik-Platte;

Figur 5    eine auflichtmikroskopische Aufnahme der Siliciumkarbidkeramikmaterial-Platte gemäß dem ersten Ausführungsbeispiel bei kleiner relativer Dicke;

Figur 6    eine auflichtmikroskopische Aufnahme der Siliciumkarbidmaterial-Platte gemäß dem ersten Ausführungsbeispiel bei großer relativer Dicke und

Figur 7    für ein zweites Ausführungsbeispiel den Verlauf der Rohdichte $\rho_r$ als Funktion der relativen Dicke $d_r$ bei einem gemäß einer Ausführungsform des erfindungsgemäßen Verfahrens hergestellten Vorkörper und einem daraus hergestellten Kohlenstoffkörper (für den die Rohdichte berechnet ist).

Gemäß dem erfindungsgemäßen Verfahren wird ein Bauteil aus dem erfindungsgemäßen Karbidkeramikmaterial dadurch hergestellt, dass aus einem Ausgangsmaterial, welches zellulosehaltiges Pulver enthält, ein poröser Vorkörper hergestellt wird. Der poröse Vorkörper wird pyrolysiert (karbonisiert) und dabei in einen offenporösen Kohlenstoffkörper umgewandelt. Dieser (ebenfalls erfindungsgemäße) Kohlenstoffkörper wird durch Infiltration von Silicium umfassenden Materialien in eine Silicium umfassende Karbidkeramik umgewandelt.

Ein solches Verfahren sowie Bauteil und Vorkörper sind in der nicht vorveröffentlichten deutschen Patentanmeldung Nr. 103 29 822.3 vom 30. Juni 2003 beschrieben.

Das Ausgangsmaterial für den Vorkörper umfasst zellulosehaltiges Pulver; dazu sind beispielsweise Holzpartikel und/oder Zellulosepartikel mit einem Partikeldurchmesser von kleiner 500 μm vorgesehen. Ferner umfasst das Ausgangsmaterial ein Bindemittel wie beispielsweise pulverförmiges Phenolharz; die Korngröße des pulverförmigen Phenolharzes liegt vorzugsweise unter 15 μm.

In dem Ausgangsmaterial können weitere Additive vorhanden sein. Diese lassen sich als reaktive Additive und als nicht-reaktive Additive unterscheiden: Reaktive Additive beeinflussen die chemischen Vorgänge insbesondere bei der Silicierung. Als reaktives Additiv kann beispielsweise Ruß oder Graphit eingesetzt werden. Es ist auch möglich, dehydrierende Verbindungen wie beispielsweise Borsäure oder Phosphorsäure als reaktives Additiv (bzw. Katalysator) einzusetzen.

Nicht-reaktive Additive sind "Füllmaterialien". Beispielsweise können als Additive Karbide und Boride eingesetzt werden. Es ist auch möglich, Fasern und insbesondere Kurzfasern als Additiv einzusetzen. Vorzugsweise werden Kohlefasern und insbesondere Kohlenstoff-Kurzfasern eingesetzt. Ein entsprechendes Herstellungsverfahren sowie das zugehörige Karbidkeramikmaterial (bei welchem in einer Si/SiC-reichen Keramikmatrix Kohlenstoff-Kurzfasern verteilt eingebettet sind) ist in der nicht vorveröffentlichten deutschen Patentanmeldung Nr. 10 2004 043 985.0 vom 8. September 2004 beschrieben.

Bei einer Ausführungsform werden die Ausgangsbestandteile des Ausgangsmaterials gemischt und homogenisiert. Zur Mischung und Homogenisierung wird beispielsweise ein Rührmischgerät verwendet.

Aus dem so vorbearbeiteten Ausgangsmaterial wird der Vorkörper insbesondere durch Pressung hergestellt. Dazu wird das Ausgangsmaterial in eine Preßform eingebracht. Durch Pressung der Preßmasse, welche insbesondere unter Wärmebeaufschlagung erfolgt, wird ein poröser Vorkörper hergestellt. Die Preßform ist vorzugsweise derart ausgebildet, dass der Vorkörper endkonturnah zu dem herzustellenden Bauteil aus dem Karbidkeramikmaterial ist.

Der Vorkörper weist vorzugsweise eine über einen Querschnitt des Vorkörpers ermittelte Rohdichte auf, welche im Bereich zwischen 0,4 g/cm$^3$ und 1,2 g/cm$^3$ liegt.

Erfindungsgemäß ist es vorgesehen, dass der Vorkörper mit einem definierten gradierten Dichteprofil hergestellt wird. Dadurch wird es ermöglicht, dass der Kohlenstoffkörper ein definiertes gradiertes Dichteprofil aufweist und das Karbidkeramikmaterial-Bauteil ein definiertes gradiertes Phasenverteilungsprofil aufweist.

Das gradierte Dichteprofil im Vorkörper (welcher auch als Holzwerkstoffformteil bezeichnet werden kann) wird beispielsweise durch Variation der Wärmezufuhr beim Pressvorgang erreicht. Dabei wird die Eigenschaft des zellulosehaltigen Werkstoffes genutzt, dass eine Plastifizierung unter Wärmeeinfluß (und Dampfeinfluß) erfolgt. Durch die Plastifizierung wiederum wird der Verdichtungswiderstand im Werkstoff lokal herabgesetzt.

Die Wärmezufuhr kann flächig über Kontaktflächen der Preßform zur Herstellung des Vorkörpers erfolgen. Es ist auch möglich, eine Mikrowellenheizung oder Hochfrequenz-Beheizung vorzusehen. Die Variation der Wärmezufuhr kann über eine räumliche und/oder zeitliche Variation erfolgen. Beispielsweise werden unterschiedliche Kontaktflächen der Preßform unterschiedlich warmebeaufschlagt.

Es ist auch alternativ oder zusätzlich möglich, den Dichtegradienten im Vorkörper dadurch herzustellen, dass der Pressvorgang in unterschiedliche Phasen unterteilt wird, in welchen die Preßform geschlossen wird und/oder geöffnet wird und/oder der Verdichtungsvorgang stationär gehalten wird.

Weiterhin ist es alternativ oder zusätzlich möglich, über eine räumliche Variation der Feuchte im Ausgangsmaterial eine räumliche Variation im Verdichtungswiderstand herzustellen, um so wiederum einen Vorkörper mit einem definierten gradierten Dichteprofil herzustellen. Höhere Feuchtigkeitsgehalte führen zu einer schnelleren Erwärmung des entsprechenden Bereichs und damit zu einem geringeren Verdichtungswiderstand.

Es kann dabei insbesondere bei hohen Feuchtigkeitsgehalten des Ausgangsmaterials als Preßmasse notwendig sein, eine aktive Abkühlung nach dem Aushärtungsprozeß des Bindungsmittels vorzusehen, um den Dampfdruck abbauen zu können. Dadurch läßt sich eine Bauteilschädigung (des Vorkörpers) beim Öffnen der Presse vermeiden.

Es ist alternativ oder zusätzlich möglich, dass unterschiedliche Partikelgrößen im Ausgangsmaterial verwendet werden und die Partikel im Ausgangsmaterial räumlich variierend entsprechend dem zu erzielenden Dichteprofil angeordnet werden.

Es ist alternativ oder zusätzlich auch möglich, dass der Anteil an Additiven über den Querschnitt der Preßmasse räumlich variiert wird, um einen definierten Dichtegradienten für den Vorkörper einzustellen. Beispielsweise wird der Anteil an Kohlenstofffasern räumlich variiert.

Die Wärmebeaufschlagung des Pressvorgangs erfolgt derart, dass das für die vollständige Aushärtung des Bindemittels in der Preßmasse notwendige Temperaturniveau über den gesamten Querschnitt ausreichend lange vorliegt.

Der so hergestellte poröse Vorkörper (Holzwerkstoffformteil bzw. Grünkörperbauteil) wird dann pyrolysiert (karbonisiert). Die Pyrolyse erfolgt unter Inertgasatmosphäre, wobei als Inertgas beispielsweise Stickstoff eingesetzt wird. Vorzugsweise wird die Pyrolyse unter Normaldruck durchgeführt. Die Maximaltemperaturen der Pyrolyse liegen zwischen ca. 800°C und 1700°C.

Es zeigt sich, dass der bei der Pyrolyse auftretende Masseverlust in der Größenordnung unterhalb 70 % liegt und die Volumenreduktion in der Größenordnung unterhalb 65 % liegt.

Es hat sich als besonders günstig erwiesen, wenn bis Erreichen des Temperaturniveaus von ca. 400°C die Temperatur möglichst langsam hochgefahren wird.

Das Ergebnis der Pyrolyse ist ein erfindungsgemäßer offenporöser Kohlenstoffkörper.

Es kann vorgesehen sein, dass im Anschluß an die Pyrolyse dieser Kohlenstoffkörper bearbeitet und insbesondere feinbearbeitet wird, um eine gewünschte Form zu erzielen. Alternativ ist es möglich, dass der Kohlenstoffkörper endkonturnah hergestellt wird, und zwar beispielsweise als Teilkomponente oder als komplettes Bauteil. (Bei der Herstellung als Teilkomponente werden mehrere pyrolysierte Teilkomponenten miteinander mittels kohlenstoffhaltigen Pasten verbunden und anschließend siliciert.)

Der offenporöse Kohlenstoffkörper wird dann siliciert. Die Silicierung kann in flüssiger oder gasförmiger Form erfolgen, wobei sich die Flüssigsilicierung als vorteilhaft erwiesen hat. Vorzugsweise liegt die Temperatur, bei der die Flüssigsilicierung erfolgt, oberhalb von 1400°C. Die Silicierung erfolgt unter Inertgas, wobei vorteilhafterweise der Druck des Inertgases im Bereich zwischen ca. 0,01 mbar und ca. 10 mbar liegt. Es ist günstig, wenn die Maximaltemperatur bis zu ca. 2 Stunden gehalten wird.

Es hat sich gezeigt, dass eine Komplettkonvertierung des Kohlenstoffkörpers erreicht werden kann, wenn die maximale Rohdichte im Querschnitt des Kohlenstoffkörpers höchstens 0,96 g/cm$^3$ beträgt. Je nach Rohdichte des Kohlenstoffkörpers werden Siliciummengen von 200 % bis 600 % bezogen auf die Masse des Kohlenstoffkörpers angeboten. Die Korngröße des Siliciumgranulats für die Flüssigsilicierung liegt zwischen 0,1 mm und 10 mm.

Das so hergestellte Siliciumkarbidkeramikmaterial weist eine Si-Phase und SiC-Phase auf, welche entsprechend dem gradierten Dichteprofil des Vorkörpers gradiert verteilt sind. Es hat sich gezeigt, dass sich abhängig von der Rohdichteverteilung im Vorkörper sich ein SiC-Gehalt bezogen auf den Bauteilquerschnitt des Siliciumkarbidkeramikmaterial-Bauteils zwischen 30 Vol.% und 90 Vol.% einstellen läßt. Das gradierte Phasenverteilungsprofil läßt sich dabei im wesentlichen stufenlos einstellen, d. h. es läßt sich ein gradiertes kontinuierliches Phasenverteilungsprofil einstellen, bei welchem keine abrupte Änderung in der Verteilung erfolgt.

Mit dem oben beschriebenen Verfahren lassen sich Bauteile oder Beschichtungen aus Siliciumkarbidkeramikmaterialien herstellen, welche räumlich variierende Eigenschaften haben. Solche räumlich variierenden Eigenschaften können beispielsweise bei Friktionsanwendungen (d. h. für Reibkörper) angewandt werden.

Beispielsweise ist es vorgesehen, ein Bauteil herzustellen, welches an der Oberfläche und in einem oberflächennahen Bereich einen hohen SiC-Anteil hat; durch den hohen SiC-Anteil ist eine hohe Abriebfestigkeit an der Oberfläche gewährleistet sowie eine große Härte und hohe Wärmeleitfähigkeit. Zum Inneren des Bauteils kann über enthaltene Kohlenstofffasern eine hohe Zugfestigkeit oder Druckfestigkeit oder Biegefestigkeit erreicht werden.

Die Gradierung im Phasenverteilungsprofil erlaubt eine Funktionstrennung an dem Bauteil.

Ein weiteres Anwendungsbeispiel ist ein Träger für eine Oberflächenbeschichtung. Über eine Gradierung des Trägers bezüglich des Phasenverteilungsprofils läßt sich der Ausdehnungskoeffizient des Bauteils einstellen. Dadurch wiederum ist eine Anpassung an den thermischen Ausdehnungskoeffizienten einer Oberflächenbeschichtung möglich ("thermal matching").

Weitere Anwendungsbeispiele liegen im Bereich der Hochtemperaturanwendungen; auch dort kann eine Funktionstrennung an einem Bauteil von großer Bedeutung sein. Beispielsweise lassen sich mit dem erfindungsgemäßen Verfahren Bauteile herstellen, welche eine gasdichte und kohlenstofffreie Oberfläche aufweisen, während im Innern des Bauteils für eine mechanische Stabilität gesorgt wird, um insbesondere tragende Eigenschaften bereitzustellen. Diese mechanische Stabilität kann durch Kohlenstofffaserverstärkung erreicht werden. Mittels solcher Bauteile lassen sich beispielsweise Wärmetauscher herstellen.

Ein weiteres Anwendungsbeispiel liegt in der Ballistik. Bauteile in der Ballistik sollen eine harte Außenzone (Fangschicht) aufweisen und eine duktile schadenstolerante Innenzone (Backing). Die harte Außenzone läßt sich mit einem hohen Keramikgehalt und insbesondere hohen Si/SiC-Gehalt herstellen und die Innenzone läßt sich mit einem hohen Faseranteil herstellen.

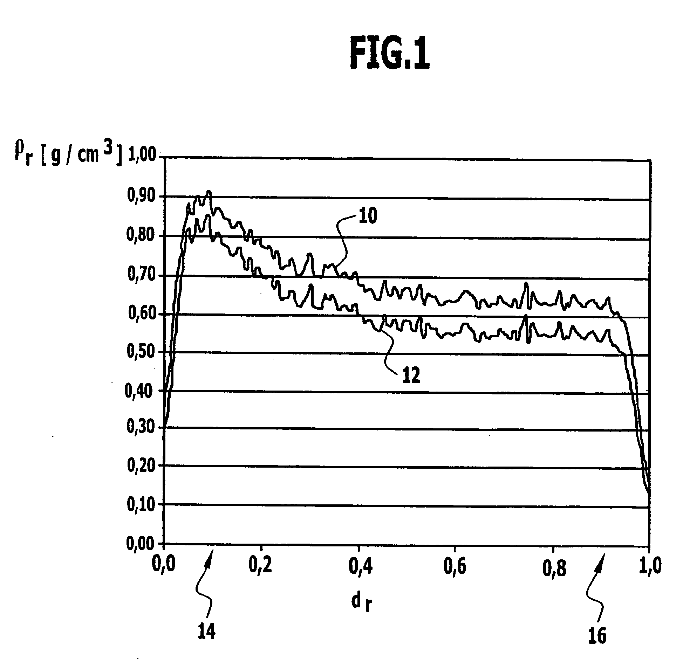

Ein erstes konkretes Ausführungsbeispiel wird anhand der Figuren 1 bis 6 erläutert.

Bei diesem Ausführungsbeispiel wird das Ausgangsmaterial aus feinem Buchenholzmehl mit einer Korngröße von ca. 45 μm und mit pulverförmigem Phenolharz mit einer Korngröße von ca. 15 μm hergestellt, wobei der Massenanteil des Buchenholzmehls ca. 77 % beträgt und der Massenanteil des Phenolharzes entsprechend ca. 23 % beträgt. (Bei diesem konkreten Ausführungsbeispiel wurden keine weiteren Additive eingesetzt.)

Der Vorkörper (Holzwerkstoffvorkörper) wird als plattenförmiges Teil durch Pressen hergestellt. Das Ausgangsmaterial wird in eine Presse gegeben. Diese weist eine erste Kontaktfläche und eine gegenüberliegende zweite Kontaktfläche auf. Beim Pressvorgang mit konstanter Geschwindigkeit wird nur die erste Kontaktfläche aufgeheizt, und zwar auf 180°C aufgeheizt, während an der zweiten Kontaktfläche keine Wärmebeaufschlagung erfolgt. Bei Erreichen der Dicke von 10 mm wurde dann die zweite Kontaktfläche auf 180°C aufgeheizt. Dadurch wird gewährleistet, dass das Bindemittel in der Preßmasse vollständig aushärten kann.

In Figur 1 ist das Dichteprofil (Bezugszeichen 10) des so hergestellten Vorkörpers gezeigt. Es ist dabei die Rohdichte $\rho_r$ aufgetragen über die relative Dicke $d_r$. Man erkennt den räumlich gradierten Verlauf der Rohdichte des Vorkörpers über der Dicke des Vorkörpers.

Anschließend wurde der Vorkörper zur Karbonisierung pyrolysiert. Die Pyrolyse wurde unter Stickstoff als Schutzgas bei Normaldruck und einer Temperatur von 900°C durchgeführt. Der Massenverlust liegt in der Größenordnung von 65 % bei einer Volumenreduktion von ca. 63 %. Damit einher geht eine Dichtereduktion des Kohlenstoffkörpers im Vergleich zu dem Vorkörper in allen Bereichen des Querschnitts.

Erfindungsgemäß wird diese Dichtereduktion für die Einstellung des Phasenverteilungsprofils berücksichtigt.

Das Dichteprofil des Kohlenstoffkörpers läßt sich aus dem Dichteprofil des Vorkörpers gemäß:

$$\rho_r^c = 0{,}12\, \rho_r^{v^2} + 0{,}93\, \rho_r^v - 0{,}06$$

berechnen. $\rho_r^c$ ist dabei die (räumlich variierende) Dichte des Kohlenstoffkörpers und $\rho_r^v$ ist die (räumlich variierende) Dichte des Vorkörpers.

In Figur 1 ist das berechnete Dichteprofil des Kohlenstoffkörpers gezeigt und mit dem Bezugszeichen 12 bezeichnet. Messungen zeigen, dass die berechneten Werte in guter Übereinstimmung mit Meßwerten liegen.

Das Dichteprofil 12 des Vorkörpers ist asymmetrisch: In Richtung einer ersten Oberfläche liegt eine höhere Rohdichte vor als in Richtung der gegenüberliegenden anderen Oberfläche des plattenförmigen Kohlenstoffkörpers.

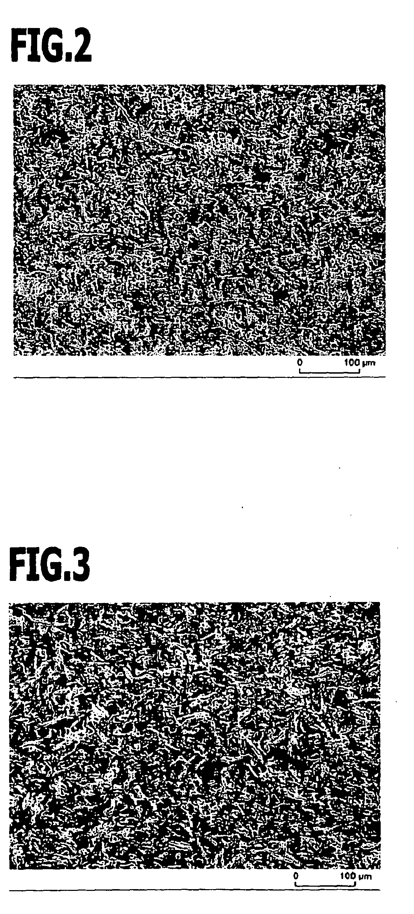

In Figur 2 ist die Porenstruktur des hergestellten Kohlenstoffkörpers für eine Dicke 14 (Figur 1) gezeigt, bei welcher eine hohe relative Rohdichte vorliegt. Figur 2 ist eine auflichtmikroskopische Aufnahme an einem entsprechenden Schnitt. Die dunklen Bereiche sind Porenbereiche und die hellen Bereiche sind Kohlenstoffbereiche.

In Figur 3 ist eine äquivalente Aufnahme für einen Bereich 16 gezeigt, welcher in der Nähe der gegenüberliegenden Oberfläche liegt und bei dem eine kleinere relative Rohdichte vorliegt. Man erkennt den größeren Anteil der Porenbereiche und den verringerten Anteil der Kohlenstoffbereiche.

Zwischen den Dicken 14 und 16 erfolgt ein mindestens näherungsweise gradierter Dichteübergang, d. h. es liegt mindestens ein Gradierungsbereich bezüglich der Dichte vor.

Der plattenförmige Kohlenstoffkörper wurde anschließend siliciert. Dazu wurde dieser Kohlenstoffkörper (C-Template) mit etwa 420 % an Silicium bezogen auf die Masse des Kohlenstoffkörpers siliciert. Jeweils die Hälfte des Siliciums wurde von oben (d. h. von der ersten Oberfläche her) und von unten (d. h. von der zweiten Oberfläche her) angeboten.

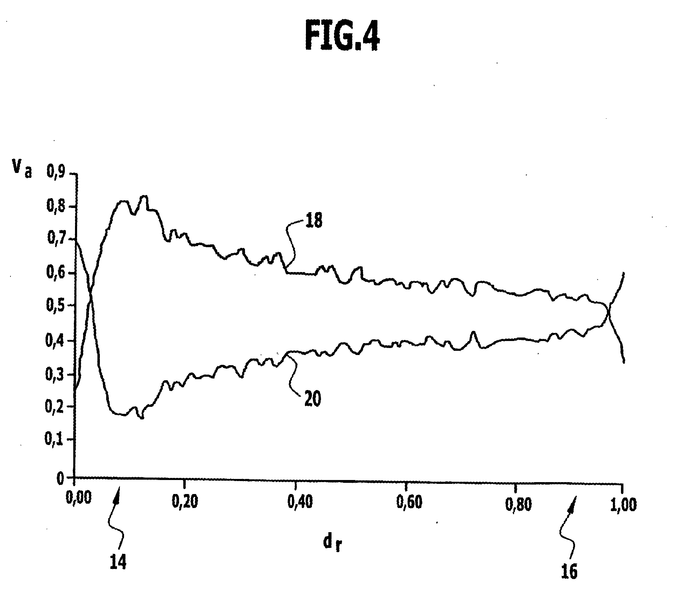

Das Endergebnis der Silicierung ist eine Siliciumkarbidkeramikplatte mit Si-Phasenbereichen und SiC-Phasenbereichen. Das entsprechend hergestellte Keramikmaterial ist dicht und nahezu porenfrei. Es weist eine im wesentlichen kontinuierliche gradierte Veränderung der Phasenanteile über den Querschnitt auf. In Figur 4 ist dazu der relative Volumenanteil $V_a$ der SiC-Phase (Bezugszeichen 18) und der Si-Phase (Bezugszeichen 20) über der relativen Dicke $d_r$ der Karbidkeramikmaterialplatte gezeigt. Die Volumenanteile wurden dabei berechnet.

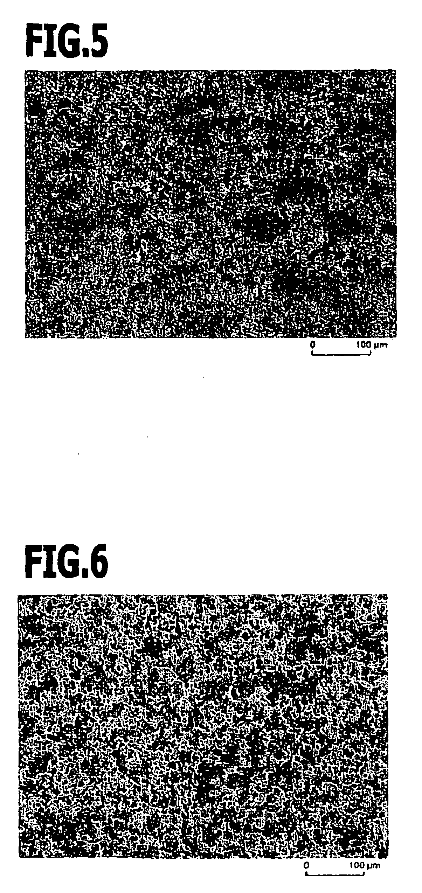

Figur 5 zeigt die Phasenverteilung im Dickenbereich 14. Die dunkelgrauen Bereiche sind SiC-Bereiche und die hellgrauen Bereiche sind Si-Bereiche. Man erkennt, dass die SiC-Bereiche bei kleinen relativen Dicken überwiegen.

Figur 6 zeigt eine auflichtmikroskopische Aufnahme aus dem Dickenbereich 16. Man erkennt hier, dass im Vergleich zu der kleinen Dicke der Si-Phasenanteil größer ist.

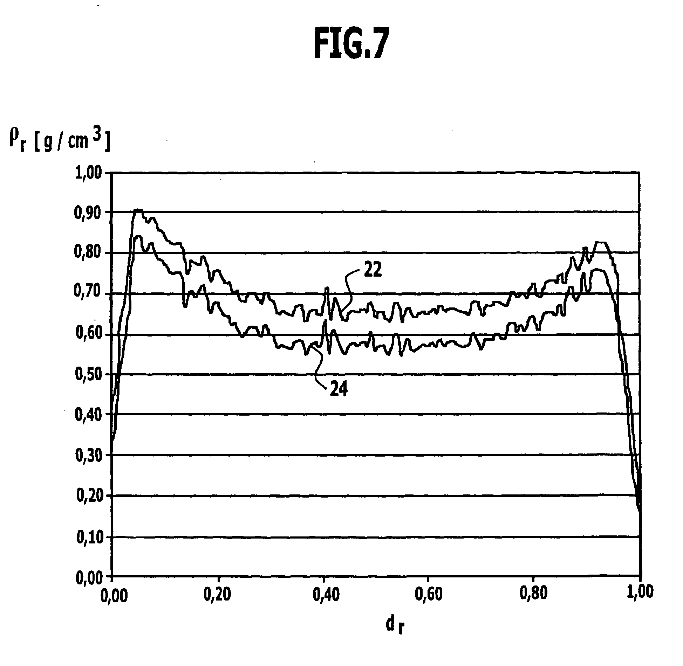

Bei einem zweiten konkreten Ausführungsbeispiel wurde für den Vorkörper, wie in Figur 7 gezeigt, ein symmetrisches Dichteprofil 22 eingestellt. Es wurde dabei das gleiche Ausgangsmaterial (d. h. die gleiche Zusammensetzung) wie bei dem ersten konkreten Ausführungsbeispiel verwendet. Das symmetrische Dichteprofil wurde dadurch eingestellt, dass in der Preßform beide Kontaktflächen beheizt wurden. Der Kohlenstoffkörper wurde in einer nachfolgenden Pyrolyse hergestellt. Sein Dichteprofil ist in Figur 7 mit dem Bezugszeichen 24 bezeichnet gezeigt. (Das Dichteprofil 24 wurde aus dem Dichteprofil 22 berechnet.) Anschließend wurde eine Silicierung mit 390 % Silicium bezogen auf die Masse des Kohlenstoffkörpers durchgeführt.

## Patentansprüche

1. Verfahren zur Herstellung eines Karbidkeramikmaterials, insbesondere Siliciumkarbidkeramikmaterials, mit definiertem gradierten Phasenverteilungsprofil, bei welchem aus einem Ausgangsmaterial, welches zellulosehaltiges Pulver umfasst, ein poröser Vorkörper hergestellt wird, der Vorkörper durch Pyrolyse in einen offenporösen Kohlenstoffkörper umgewandelt wird und der Kohlenstoffkörper durch Infiltration von Silicium umfassenden Materialien in eine Silicium umfassende Karbidkeramik umgewandelt wird, wobei der Vorkörper mit einem definierten gradierten Dichteprofil hergestellt wird.

2. Verfahren nach Anspruch 1, **dadurch gekennzeichnet, dass** das Phasenverteilungsprofil mindestens einen Gradientenbereich aufweist.

3. Verfahren nach Anspruch 2, **dadurch gekennzeichnet, dass** das Dichteprofil des Vorkörpers mindestens einen Gradientenbereich aufweist.

4. Verfahren nach einem der vorangehenden Ansprüche, **dadurch gekennzeichnet, dass** bei der Einstellung der Dichte und/oder des Dichteprofils des Vorkörpers die Veränderung der Rohdichte bei der Pyrolyse zur Herstellung des Kohlenstoffkörpers berücksichtigt wird.

5. Verfahren nach einem der vorangehenden Ansprüche, **dadurch gekennzeichnet, dass** ein Ausgangsmaterial für den Vorkörper Bindemittel umfasst.

6. Verfahren nach Anspruch 5, **dadurch gekennzeichnet, dass** der Vorkörper mittels Bindemittelaushärtung hergestellt wird.

7. Verfahren nach Anspruch 5 oder 6, **dadurch gekennzeichnet, dass** ein Ausgangsmaterial für den Vorkörper ein oder mehrere Additive und/oder Katalysatoren umfasst.

8. Verfahren nach Anspruch 7, **dadurch gekennzeichnet, dass** ein oder mehrere reaktive Additive verwendet werden.

9. Verfahren nach Anspruch 7 oder 8, **dadurch ge-**

**kennzeichnet, dass** ein oder mehrere nicht-reaktive Additive verwendet werden.

10. Verfahren nach Anspruch 9, **dadurch gekennzeichnet, dass** Fasern als Additiv vorgesehen werden.

11. Verfahren nach einem der vorangehenden Ansprüche, **dadurch gekennzeichnet, dass** der Vorkörper aus einem Ausgangsmaterial durch Pressen hergestellt wird.

12. Verfahren nach Anspruch 11, **dadurch gekennzeichnet, dass** beim Pressvorgang Wärme zugeführt wird.

13. Verfahren nach einem der vorangehenden Ansprüche, **dadurch gekennzeichnet, dass** das Dichteprofil über die Zusammensetzung des Ausgangsmaterials eingestellt wird.

14. Verfahren nach Anspruch 13, **dadurch gekennzeichnet, dass** unterschiedliche Partikelgrößen im Ausgangsmaterial verwendet werden und Partikel unterschiedlicher Partikelgröße im Ausgangsmaterial räumlich variierend angeordnet werden.

15. Verfahren nach Anspruch 13 oder 14, **dadurch gekennzeichnet, dass** der Anteil an Additiv oder Additiven im Ausgangsmaterial räumlich variierend gewählt wird.

16. Verfahren nach einem der vorangehenden Ansprüche, **dadurch gekennzeichnet, dass** das Dichteprofil des Vorkörpers während des Herstellungsvorgangs des Vorkörpers aus einem Ausgangsmaterial eingestellt wird.

17. Verfahren nach einem der Ansprüche 12 bis 16, **dadurch gekennzeichnet, dass** während des Herstellungsvorgangs des Vorkörpers der Verdichtungswiderstand des zellulosehaltigen Pulvers räumlich beeinflusst wird.

18. Verfahren nach Anspruch 17, **dadurch gekennzeichnet, dass** der Verdichtungswiderstand räumlich über eine Wärmebeeinflussung eingestellt wird.

19. Verfahren nach Anspruch 17 oder 18, **dadurch gekennzeichnet, dass** der Verdichtungswiderstand räumlich über das Pressen des Vorkörpers mit Schließphasen und/oder Öffnungsphasen und/oder Haltephasen an einer Preßform eingestellt wird.

20. Verfahren nach einem der Ansprüche 17 bis 19, **dadurch gekennzeichnet, dass** der Verdichtungswiderstand räumlich über den Feuchtigkeitsgehalt des Ausgangsmaterials eingestellt wird.

21. Verfahren nach einem der vorangehenden Ansprüche, **dadurch gekennzeichnet, dass** die Rohdichte im Querschnitt des Kohlenstoffkörpers höchstens $0{,}96 \text{ g/cm}^3$ ist.

22. Verfahren nach einem der vorangehenden Ansprüche, **dadurch gekennzeichnet, dass** der Vorkörper und/oder Kohlenstoffkörper endkonturnah hergestellt wird.

23. Verfahren nach einem der Ansprüche 1 bis 21, **dadurch gekennzeichnet, dass** der Kohlenstoffkörper vor der Infiltration durch Silicium mechanisch bearbeitet wird.

24. Verfahren nach einem der vorangehenden Ansprüche, **dadurch gekennzeichnet, dass** der SiC-Gehalt in der Karbidkeramik räumlich variierend eingestellt wird.

25. Verfahren nach Anspruch 24, **dadurch gekennzeichnet, dass** der SiC-Gehalt zwischen 25 Volumen-% und 95 Volumen-% eingestellt wird.

26. Karbidkeramikmaterial, insbesondere Siliciumkarbidkeramikmaterial, mit einer Si/SiC-reichen Keramikmatrix, bei welcher das Phasenverteilungsprofil der Keramikmatrix mindestens einen Gradientenbereich aufweist, wobei der SiC-Gehalt räumlich variiert.

27. Karbidkeramikmaterial nach Anspruch 26, **dadurch gekennzeichnet, dass** der SiC-Gehalt zwischen 25 Volumen-% und 95 Volumen-% liegt.

28. Karbidkeramikmaterial nach Anspruch 26 oder 27, **dadurch gekennzeichnet, dass** der Si-Gehalt räumlich variiert.

29. Karbidkeramikmaterial nach Anspruch 28, **dadurch gekennzeichnet, dass** der Si-Gehalt räumlich reziprok zum SiC-Gehalt variiert.

30. Karbidkeramikmaterial nach einem der Ansprüche 26 bis 29, **dadurch gekennzeichnet, dass** in der Si/SiC-reichen Keramikmatrix Fasern angeordnet sind.

31. Bauteil, welches gemäß dem Verfahren nach einem der Ansprüche 1 bis 25 hergestellt ist und/oder aus dem Karbidkeramikmaterial gemäß einem der Ansprüche 26 bis 30 hergestellt ist.

32. Bauteil nach Anspruch 31, **dadurch gekennzeichnet, dass** das Bauteil zu einer Oberfläche hin einen höheren SiC-Anteil aufweist als zu einem Bauteilinneren hin.

**33.** Bauteil nach Anspruch 32, **dadurch gekennzeichnet, dass** in einem Bauteilinneren Kohlenstoffasern angeordnet sind.

**34.** Bauteil nach einem der Ansprüche 31 bis 33, **dadurch gekennzeichnet, dass** über das Phasenverteilungsprofil ein Wärmeausdehnungsprofil eingestellt ist.

**35.** Verfahren zur Herstellung eines Kohlenstoffkörpers mit definiertem gradierten Dichteprofil, bei welchem aus einem Ausgangsmaterial, welches zellulosehaltiges Pulver umfasst, ein poröser Vorkörper hergestellt wird und der Vorkörper durch Pyrolyse in einen offenporösen Kohlenstoffkörper umgewandelt wird, wobei der Vorkörper mit einem definierten gradierten Dichteprofil hergestellt wird.

**Claims**

**1.** A method for the production of a carbide ceramic material, in particular, a silicon carbide ceramic material, having a defined graded phase distribution profile, wherein a porous preform is produced from a starting material comprising a cellulose-containing material, the preform is converted into an open-pored carbon body by means of pyrolysis and the carbon body is converted into a carbide ceramic comprising silicon by the infiltration of silicon-containing materials, whereby the preform is produced with a defined graded density profile.

**2.** A method in accordance with Claim 1, **characterized in that** the phase distribution profile has at least one gradient region.

**3.** A method in accordance with Claim 2, **characterized in that** the density profile of the preform has at least one gradient region.

**4.** A method in accordance with any of the preceding Claims, **characterized in that**, for establishing the density and/or the density profile of the preform, the change of the bulk density is taken into consideration during the pyrolysis process for the production of the carbon body.

**5.** A method in accordance with any of the preceding Claims, **characterized in that** a starting material for the preform comprises a binding agent.

**6.** A method in accordance with Claim 5, **characterized in that** the preform is produced by means of the curing of the binding agent.

**7.** A method in accordance with Claim 5 or 6, **characterized in that** a starting material for the preform comprises one or more additives and/or catalysts.

**8.** A method in accordance with Claim 7, **characterized in that** one or more reactive additives are used.

**9.** A method in accordance with Claim 7 or 8, **characterized in that** one or more non-reactive additives are used.

**10.** A method in accordance with Claim 9, **characterized in that** additives in the form of fibres are provided.

**11.** A method in accordance with any of the preceding Claims, **characterized in that** the preform is produced from a starting material by compression.

**12.** A method in accordance with Claim 11, **characterized in that** heat is supplied during the compression process.

**13.** A method in accordance with any of the preceding Claims, **characterized in that** the density profile is established by the composition of the starting material.

**14.** A method in accordance with Claim 13, **characterized in that** different sizes of particle are used in the starting material and particles of differing particle size are arranged in the starting material at varying spatial positions.

**15.** A method in accordance with Claim 13 or 14, **characterized in that** the proportion of the additive or the additives in the starting material is selected in a spatially varying manner.

**16.** A method in accordance with any of the preceding Claims, **characterized in that** the density profile of the preform is established during the process of producing the preform from a starting material.

**17.** A method in accordance with any of the Claims 12 to 16, **characterized in that** the compression resistance of the cellulose-containing powder is influenced in a spatial manner during the process of producing the preform.

**18.** A method in accordance with Claim 17, **characterized in that** the compression resistance is established in a spatial manner under the influence of heat.

**19.** A method in accordance with Claim 17 or 18, **characterized in that** the compression resistance is established in a spatial manner by the process of compressing the preform in a compression mould using closing phases and/or opening phases and/or holding phases.

**20.** A method in accordance with any of the Claims 17 to 19, **characterized in that** the compression resistance is established in a spatial manner by the moisture content of the starting material.

**21.** A method in accordance with any of the preceding Claims, **characterized in that** the bulk density in the cross section of the carbon body is at most 0.96 g/cm$^3$.

**22.** A method in accordance with any of the preceding Claims, **characterized in that** the preform and/or the carbon body is produced with a near final contour.

**23.** A method in accordance with any of the Claims 1 to 21, **characterized in that** the carbon body is mechanically worked before the infiltration of the silicon.

**24.** A method in accordance with any of the preceding Claims, **characterized in that** the SiC content in the carbide ceramic is established in a spatially varying manner.

**25.** A method in accordance with Claim 24, **characterized in that** the SiC content is established to be between 25 volume % and 95 volume %.

**26.** Carbide ceramic material, in particular silicon carbide ceramic material, having a Si/SiC-rich ceramic matrix, wherein the phase distribution profile of the ceramic matrix has at least one gradient region, whereby the SiC content varies in a spatial manner.

**27.** Carbide ceramic material in accordance with Claim 26, **characterized in that** the SiC content is between 25 volume % and 95 volume %.

**28.** Carbide ceramic material in accordance with Claim 26 or 27, **characterized in that** the Si content varies in a spatial manner.

**29.** Carbide ceramic material in accordance with Claim 28, **characterized in that** the Si content varies in a spatial manner reciprocal to that of the SiC content.

**30.** Carbide ceramic material in accordance with any of the Claims 26 to 29, **characterized in that** fibres are arranged in the Si/SiC-rich ceramic matrix.

**31.** A component part which is produced in accord with the method in accordance with any of the Claims 1 to 25 and/or is produced from the carbide ceramic material in accordance with any of the Claims 26 to 30.

**32.** A component part in accordance with Claim 31, **characterized in that** the component part has a higher proportion of SiC towards a surface thereof than towards the interior of the component part.

**33.** A component part in accordance with Claim 32, **characterized in that** carbon fibres are arranged in the interior of the component part.

**34.** A component part in accordance with any of the Claims 31 to 33, **characterized in that** a thermal expansion profile is established via the phase distribution profile.

**35.** A method for the production of a carbon body having a defined graded density profile, wherein a porous preform is produced from a starting material which comprises a cellulose-containing powder and the preform is converted into an open-pored carbon body by means of pyrolysis, whereby the preform is produced with a defined graded density profile.

**Revendications**

**1.** Procédé de réalisation d'un matériau céramique à base de carbure, en particulier d'un matériau céramique à base de carbure de silicium, ayant un profil de répartition des phases gradué défini, dans lequel un support poreux est réalisé à partir d'un matériau de départ contenant de la poudre cellulosique, le support est transformé par une pyrolyse en un corps carboné à pores ouverts et le corps carbone est transformé en céramique à base de carbure comprenant du silicium par infiltration de matériaux comprenant du silicium, le support étant réalisé avec un profil de densité gradué défini.

**2.** Procédé selon la revendication 1, **caractérisé en ce que** le profil de répartition des phases comporte au moins un domaine avec un gradient.

**3.** Procédé selon la revendication 2, **caractérisé en ce que** le profil de densité du support comporte au moins un domaine avec un gradient.

**4.** Procédé selon l'une quelconque des revendications précédentes, **caractérisé en ce que**, lors de l'ajustement de la densité et/ou du profil de densité du support, la modification de la densité brute lors de la pyrolyse pour la réalisation du corps carboné est prise en compte.

**5.** Procédé selon l'une quelconque des revendications précédentes, **caractérisé en ce que** le matériau de départ pour le support comprend un liant.

**6.** Procédé selon la revendication 5, **caractérisé en ce que** le support est réalisé par durcissement du liant.

7. Procédé selon la revendication 5 ou 6, **caractérisé en ce qu'**un matériau de départ pour le support comprend un ou plusieurs additif(s) et/ou catalyseur(s).

8. Procédé selon la revendication 7, **caractérisé en ce qu'**un ou plusieurs additifs réactifs sont utilisés.

9. Procédé selon la revendication 7 ou 8, **caractérisé en ce qu'**un ou plusieurs additifs non réactifs sont utilisés.

10. Procédé selon la revendication 9, **caractérisé en ce que** des fibres sont prévues comme additif.

11. Procédé selon l'une quelconque des revendications précédentes, **caractérisé en ce que** le support est réalisé à partir d'un matériau de départ par compression.

12. Procédé selon la revendication 11, **caractérisé en ce que** de la chaleur est apportée pendant l'opération de compression.

13. Procédé selon l'une quelconque des revendications précédentes, **caractérisé en ce que** le profil de densité est ajusté par la composition du matériau de départ.

14. Procédé selon la revendication 13, **caractérisé en ce que** différentes tailles de particules sont utilisées dans le matériau de départ et que les particules de différentes tailles dans le matériau de départ sont ordonnées de manière variable dans l'espace.

15. Procédé selon la revendication 13 ou 14, **caractérisé en ce que** la proportion d'un additif ou d'additifs dans le matériau de départ est choisie de manière variable dans l'espace.

16. Procédé selon l'une quelconque des revendications précédentes, **caractérisé en ce que** le profil de densité du support est ajusté pendant la réalisation du support à partir d'un matériau de départ.

17. Procédé selon l'une quelconque des revendications 12 à 16, **caractérisé en ce que** pendant la réalisation du support, la résistance à la compression de la poudre cellulosique est influencée dans l'espace.

18. Procédé selon la revendication 17, **caractérisé en ce que** la résistance à la compression est ajusté dans via un apport de chaleur.

19. Procédé selon la revendication 17 ou 18, **caractérisé en ce que** la résistance à la compression est ajustée dans l'espace par la compression du support avec des phases de fermeture et/ou des phases d'ouverture et/ou des phases de maintien d'un moule.

20. Procédé selon l'une quelconque des revendications 17 à 19, **caractérisé en ce que** la résistance à la compression est ajusté dans l'espace au moyen de la teneur en humidité du matériau de départ.

21. Procédé selon l'une quelconque des revendications précédentes, **caractérisé en ce que** la densité brute en coupe du corps carboné est au maximum de 0,96 $g/cm^3$.

22. Procédé selon l'une quelconque des revendications précédentes, **caractérisé en ce que** le support et/ou le corps carboné sont réalisés à des dimensions proches des contours finaux.

23. Procédé selon l'une quelconque des revendications 1 à 21, **caractérisé en ce que** le corps carboné est traité mécaniquement avant l'infiltration par le silicium.

24. Procédé selon l'une quelconque des revendications précédentes, **caractérisé en ce que** la teneur en SiC dans la céramique à base de carbure est fixée de manière variable dans l'espace.

25. Procédé selon la revendication 24, **caractérisé en ce que** la teneur en SiC est fixée entre 25 % en volume et 95 % en volume.

26. Matériau céramique à base de carbure, en particulier matériau céramique à base de carbure de silicium, ayant une matrice céramique riche en Si/SiC, dans laquelle le profil de répartition des phases de la matrice céramique comporte au moins un domaine avec un gradient, où la teneur en SiC varie dans l'espace.

27. Matériau céramique à base de carbure selon la revendication 26, **caractérisé en ce que** la teneur en SiC est comprise entre 25 % en volume et 95 % en volume.

28. Matériau céramique à base de carbure selon la revendication 26 ou 27, **caractérisé en ce que** la teneur en Si varie dans l'espace.

29. Matériau céramique à base de carbure selon la revendication 28, **caractérisé en ce que** la teneur en Si varie dans l'espace proportionnellement à la teneur en SiC.

30. Matériau céramique à base de carbure selon l'une quelconque des revendications 26 à 29, **caractérisé en ce que** des fibres sont disposées dans la matrice céramique riche en Si/SiC.

31. Pièce réalisée conformément au procédé selon l'une quelconque des revendications 1 à 25 et/ou à partir du matériau céramique à base de carbure selon l'une des revendications 26 à 30.

32. Pièce selon la revendication 31, **caractérisée en ce que** la pièce présente une teneur en SiC plus élevée à la surface qu'à l'intérieur.

33. Pièce selon la revendication 32, **caractérisée en ce que** des fibres de carbone sont disposées à l'intérieur de la pièce.

34. Pièce selon l'une quelconque des revendications 31 à 33, **caractérisée en ce qu'**un profil d'expansion thermique est déterminé par le profil de répartition des phases.

35. Procédé de réalisation d'un corps carboné ayant un profil de densité gradué défini, dans lequel un support poreux est réalisé à partir d'un matériau de départ contenant de la poudre cellulosique et le support est transformé par pyrolyse en un corps carbone à pores ouverts, le support étant réalisé avec un profil de densité gradué défini.

# FIG.1

FIG.2

FIG.3

# FIG.4

## FIG.5

0  100 µm

## FIG.6

0  100 µm

# FIG.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19947731 A1
- DE 10329822
- DE 102004043985
- EP 0891956 A2
- US 20010026868 A1
- WO 102004043985 A